# EUROPEAN PATENT APPLICATION

(11) **EP 2 181 896 A1**
(43) Date of publication of application: **05.05.2010**
(21) Application number: 08018791.7
(22) Date of filing: 28.10.2008
(51) Int. Cl.: B60R 11/02

(54) **Mounting case for car radio set**

(71) Applicant: TTI Tech. Co., Ltd., Gangnam-gu Seoul 135-960 (KR)
(72) Inventor: Kim, Myung Sup, Seoul (KP)
(74) Representative: Verscht, Thomas Kurt Albert

(57) **Abstract**

A mounting case for car radio set is disclosed, wherein the mounting case provides a fast and easy way of replacing an existing car radio set with a car radio set of different size, and wherein the mounting case comprises: a front case (110), wherein a front hole (111) into which a car radio set is inserted is formed, a pair of first bolt holes (112) are formed at both sides of the front hole (111) and a pair of first support plates (113) wherein a plurality of slot holes (114) are formed are installed at both side edges of the front hole (111), so that the car radio set can be fastened to the first support plates by inserting bolts into the slot holes (114); and a rear case (120) is wherein a pair of front case installation parts (121) wherein a pair of second bolt holes (122) are formed are installed on the inside of both sides therein, so that the front case (110) can be fastened to the rear case (120) by inserting bolts into the first and the second bolt holes (112,122) while corresponding the first and second bolt holes are met.

## Description

The present invention relates to a mounting case for car radio set, more specifically, a mounting case for car radio set comprising a front case and a rear case. The front case is wherein a front hole into which a car radio set is inserted is formed, a pair of first bolt holes are formed at both sides of the front hole and a pair of first support plates wherein a plurality of slot holes are formed are installed at both side edges of the front hole, so that a car radio set can be fastened to the first support plates by inserting bolts into the slot holes. The rear case is wherein a pair of front case installation parts wherein a pair of second bolt holes are formed are installed on the inside of both sides therein, so that the front case can be fastened to the rear case by inserting bolts into the first and the second bolt holes while corresponding the first and second bolt holes are met.

Thus, front cases with front holes of a variety of sizes can be prepared and a car radio set can be installed within a front case having a front hole of corresponding size, so that mounting cases for car radio set can be compatible with car radio sets with a variety of sizes, thus providing a more economical way of installing a car radio set. And in the case of replacing an existing car radio set with a car radio set of different size, the existing rear case installed in vehicle dashboard is not required to be pulled out and only the replacement of the existing front case is required, so that a fast and easy way of replacing existing car radio set is provided.

### BACKGROUND OF THE INVENTION

### 1. Field of the invention

The present invention relates to a mounting case for car radio set, more specifically, a mounting case for car radio set offering protection for a car radio set, providing a fast and easy way of replacing an existing car radio set with a car radio set of different size because the rear case installed in vehicle dashboard is not required to be pulled out and only the replacement of the existing front case is required, and providing a more economical way of installing a car radio set by being compatible with car radio sets with a variety of sizes because front cases with front holes of a variety of sizes can be prepared and a car radio set to be installed can be installed within a front case with a front hole of corresponding size.

### 2. Description of the Related Art

In general, a car radio set is mounted on vehicle dashboard near the driver's seat so that it can be used quickly by the driver when in needs.

Car radio sets have been mounted without mounting cases for protection, thus being vulnerable to damage by shock, vibration and dust from outside.

Due to this problem, use of mounting case to mount a car radio set has gained popularity. But the prior art mounting cases are difficult to repair or replace, because they comprise a single, inseparable structure so the whole parts installed in vehicle dashboard have to be pulled out.

And, generally car radio sets are of a variety of sizes, thus needing cases of a variety of sizes, bringing about a problem that cases of a variety of sizes have to be manufactured.

And, in case of replacing an existing car radio set with a car radio set of a different size, the whole parts of the existing case needs to be replaced, thus being wasteful.

### SUMMARY OF THE INVENTION

Accordingly, the present invention has been made to solve the above-mentioned problems occurring in the prior art, and an object of the present invention is to provide a mounting case for car radio set, which can provide a fast and easy way of replacing an existing car radio set with a car radio set of different size because the rear case installed in vehicle dashboard is not required to be pulled out and only the replacement of the existing front case is required, and which can provide a more economical way of installing a car radio set by being compatible with car radio sets with a variety of sizes because front cases with front holes of a variety of sizes can be prepared and a car radio set to be installed can be installed within a front case with a front hole of corresponding size.

And, it is another object of the present invention to provide a mounting case for car radio set, which enables easy disassembling in case of repairing a car radio set, by providing a pair of fix holes formed at the both sides of the rear case, through which bolts inserted into slot holes in first support plates can be disassembled.

And, it is another object of the present invention to provide a mounting case for car radio set, which can prevent the first support plate from protruding outside by providing third bolt holes on the inside edges of the first support plates through which bolts can be inserted.

And, it is another object of the present invention to provide a mounting case for car radio set, which enables easy up-and-down or back-and-front installation position adjustment of a car radio set by providing the plurality of longitudinally or transversely extended slot holes on the first support plates.

And, it is another object of the present invention to provide a mounting case for car radio set, which can provide easy mounting of a car radio set without using any bolts and nuts when putting the car radio set inside vehicle dashboard, and which can offer protection for a car radio set from external shock by fastening the car radio set hard without using any bolts and nuts.

### TECHNICAL SOLUTION

In order to accomplish above objects, the present invention provides a mounting case for car radio set comprising: a front case wherein a front hole into which a car radio set is inserted is formed, a pair of first bolt holes are formed at both sides of the front hole and a pair of first support plates wherein a plurality of slot holes are formed are installed at both side edges of the front hole, so that the car radio set can be fastened to the first support plates by inserting bolts into the slot holes; and a rear case wherein a pair of front case installation parts wherein a pair of second bolt holes are formed are installed on the inside of both sides therein, so that the front case can be fastened to the rear case by inserting bolts into the first and the second bolt holes while corresponding the first and second bolt holes are met. And, the first support plates are characterized by having the plurality of longitudinally or transversely extended slot holes which are respectively formed by connecting two holes. And, the rear case further includes a plurality of second support plates protruding outside from each sides of the rear case and a pair of fix holes formed at the both sides of the rear case, through which the slot holes in the first support plates can be seen when the front and the rear case are assembled and fixed.

And the first support plates further include a pair of third bolt holes which are formed on the inside edges of the first support plates.

### ADVANTAGEOUS EFFECTS

Accordingly, the present invention provides a mounting case for car radio set, which can provide a fast and easy way of replacing an existing car radio set with a car radio set of different size because the rear case installed in vehicle dashboard is not required to be pulled out and only the replacement of the existing front case is required, and which can provide a more economical way of installing a car radio set by being compatible with car radio sets with a variety of sizes because front cases with front holes of a variety of sizes can be prepared and a car radio set to be installed can be installed within a front case with a front hole of corresponding size.

And, the present invention provides a mounting case for car radio set, which enables easy disassembling in case of repairing a car radio set, by providing a pair of fix holes formed at the both sides of the rear case, through which bolts inserted into slot holes in first support plates can be disassembled.

And, the present invention provides a mounting case for car radio set, which can prevent the first support plate from protruding outside by providing third bolt holes on the inside edges of the first support plates through which bolts can be inserted.

And, the present invention provides a mounting case for car radio set, which enables easy up-and-down or back-and-front installation position adjustment of a car radio set by providing the plurality of longitudinally or transversely extended slot holes on the first support plates.

And, the present invention provides a mounting case for car radio set, which can provide easy mounting of a car radio set without using any bolts and nuts when putting the car radio set inside vehicle dashboard, and which can offer protection for a car radio set from external shock by fastening the car radio set hard without using any bolts and nuts.

### BRIEF DESCRIPTION OF THE DRAWINGS

The features of the invention will be better understood by reference to the accompanying drawings which illustrate a presently preferred embodiment of the invention, thereof in a non-limitative manner. In the drawings:
FIG. 1 is a perspective view of a mounting case for car radio set according to a preferred embodiment of the present invention;
FIG. 2 is an exploded perspective view of a mounting case for car radio set according to the preferred embodiment of the present invention;
FIG. 3 is an enlarged view of part A of FIG. 2;
FIG. 4 is a side sectional view of a mounting case for car radio set according to the preferred embodiment of the present invention;
   and
FIG. 5 is a reference drawing which is showing a mounting case for car radio set being installed in vehicle dashboard according to an embodiment of the present invention.

### Description of the elements in the drawings

100: mounting case for car radio set according to a preferred embodiment of the present invention
110: front case
111: front hole
112: the first bolt hole
113: the first support plate
114: slot hole
115: the third bolt hole
120: rear case
121: front case installation part
122: the second bolt hole
123: the second support plate
124: fix hole

### DETAILED DESCRIPTION OF THE PREFERRED EMBODIMENT

Detailed description is made hereinafter for a preferred embodiment of a mounting case for car radio set according to the present invention with reference to the attached drawings.

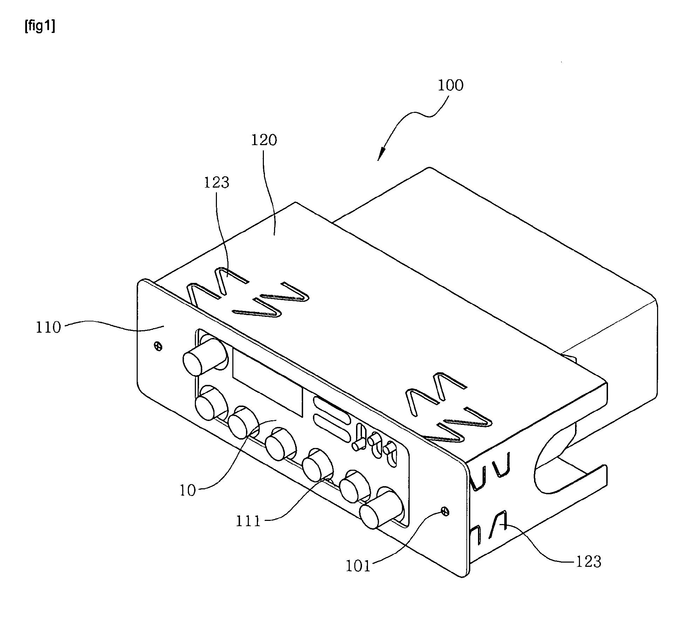

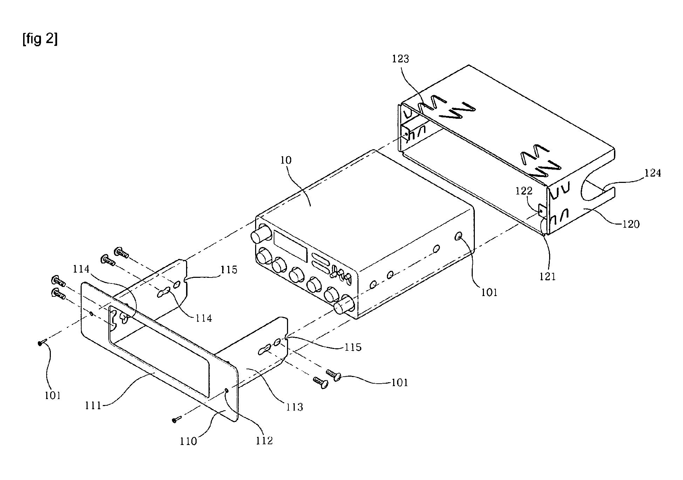

FIG. 1 is a perspective view of a mounting case for car radio set according to a preferred embodiment of the present invention, and FIG. 2 is an exploded perspective view of the mounting case for car radio set according to the preferred embodiment of the present invention.

Referring to FIG. 1 and FIG. 2, a detailed description of the mounting case for car radio set according to the preferred embodiment of the present invention is disclosed hereinafter.

The mounting case for car radio set according to the preferred embodiment of the present invention includes a front case 110 and a rear case 120.

In front case 110, a front hole 111 into which a car radio set 10 is inserted is formed, and a pair of first bolt holes 112 are formed at both sides of the front hole 111.

And, a pair of first support plates 113 are installed at both side edges of the front hole 111, by welding or gluing one ends of each of the first support plate 113 onto the both side edges of the front hole 111, after bending one ends of each of the first support plate 113.

The first bolt holes 112 are preferred to be formed at both outsides of the first support plates 113.

The first support plates 113, which are installed at both side edges of the front hole 111 as described above, are preferred to have a plurality of slot holes 114 therein.

One of the slot holes 114 is formed by connecting two holes transversely and the other one of the slot holes 114 is formed by connecting two holes longitudinally on each of the first support plate 113.

The car radio set 10 is fastened to the first support plates 113 by inserting bolts 101 into the slot holes 114, and the installation position of the car radio set 10 can be adjusted after slightly (not fully) unscrewing the bolts 101. Adjustment of the installation position of the car radio set 10 will be explained again in detail later.

And, a pair of third bolt holes 115, preferably formed in the shape of half circle, are formed on the inside edges of the first support plates 113.

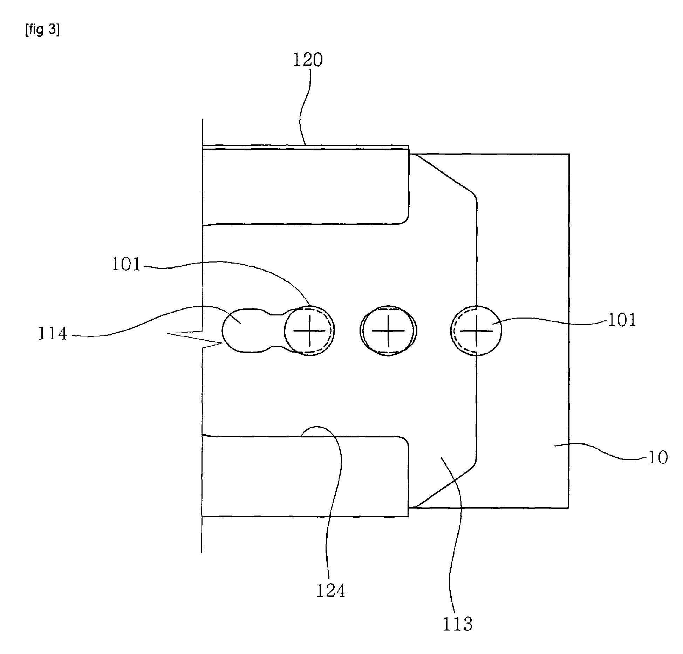

If a pair of bolts 101 are inserted through the third bolt holes 115 into the first support plates 113 and the both sides of the car radio set 10 which is fastened to the first support plates 113, the bolts 101 can prevent the first support plates 113 from protruding outside. Detailed description of the third bolt holes 115 will be disclosed later referring to FIG. 3.

In rear case 120, a pair of front case installation parts 121 wherein a pair of second bolt holes 122 are formed are installed on the inside of both side therein, after bending one ends of each of the front case installation part 121.

For the front case installation parts 121, the front case 110 is fastened to the rear case 120 by inserting bolts 101 into the first and the second bolt holes 112 and 122 while corresponding the first and second bolt holes 112 and 122 are met.

And, a plurality of second support plates 123 are formed, protruding outside from each side surfaces of the rear case 120.

FIG. 3 is an enlarged view of part A of FIG. 2.

Referring to FIG. 3, as shown in FIG.3, the fix holes 124 are formed at the both sides of the rear case 120.

The fix holes 124 are for easy disassembling of the car radio set 10 installed in the first support plates 113, in the case of repairing or disassembling the car radio set 10, thus enabling easy screwing and unscrewing of the bolts 101, which are inserted through the slot holes 114 into the first support plates 113, by using tools such as a screwdriver.

And, the third bolt holes 115 are formed on the inside edges of the first support plates 113, so if a pair of bolts 101 are inserted through the third bolt holes 115 into the first support plates 113 and the both sides of the car radio set 10, the bolts 101 can prevent the first support plates 113 from protruding outside.

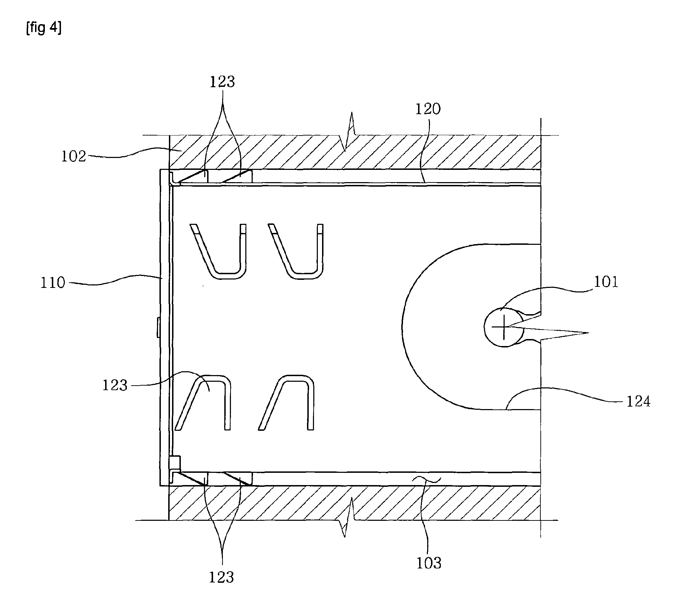

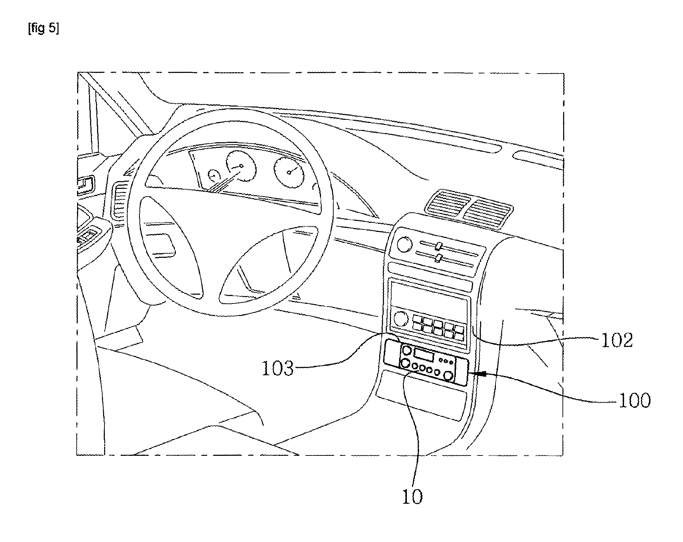

FIG. 4 is a side sectional view of the mounting case for car radio set according to the preferred embodiment of the present invention, and FIG. 5 is a reference drawing which is showing a mounting case for car radio set being installed in vehicle dashboard according to an embodiment of the present invention.

Referring to FIG.4 and FIG. 5, the mounting case for car radio set 100 according to the preferred embodiment of the present invention is conveniently installed in mounting space 103 inside vehicle dashboard 102, via shrink fit of the mounting case for car radio set 100 in the mounting space 103 after bending the second support plates 123 toward outside, enabling easy installation without any bolts and nuts.

The installation procedure of the mounting case for car radio set 100 according to the preferred embodiment of the present invention is described hereinafter.

Referring to FIG. 1 to FIG. 5, a car radio set 10 is inserted through the front hole 111 of the front case 110.

And, a plurality of bolts 101 are inserted and screwed into the slot holes 114 in the first support plates 113.

In this case, the bolts 101 inserted into the both sides of the car radio set 10 are halfway into the third bolt holes 115, thus preventing the first support plates 113 from protruding outside.

And, the rear case 120 is positioned behind the front case 110 so that corresponding the first and second bolt holes 112 and 122 can be met each other.

And, other bolts 101 are inserted into corresponding the first and second bolt holes 112 and 122, fastening and fixing the front case 110 to the rear case 120.

And, the mounting case for car radio set 100 according to the preferred embodiment of the present invention is installed in vehicle dashboard 102.

In this case, the mounting case for car radio set 100 according to the preferred embodiment of the present invention is conveniently installed in the mounting space 103 inside vehicle dashboard 102, via shrink fit of the mounting case for car radio set 100 in the mounting space 103 after bending the second support plates 123 toward outside.

In case of repairing the car radio set 10, the car radio set 10 can be pulled out through the front hole 111, after unscrewing the bolts 101 inserted in the slot holes 114 by using tools such as a screwdriver through the fix hole 124.

And, the installation position of the car radio set 10 can be adjusted after slightly (not fully) unscrewing the bolts 101 inserted in the slot holes 114.

In case of adjusting installation position longitudinally, the car radio set 10 can be moved up-and-down after unscrewing the bolts 101 in the longitudinally extended slot holes 114 which are formed in the first support plates 113 by connecting two holes longitudinally.

Then, after the bolts 101 are screwed back in the slot holes 114, the position of the car radio set 10 is fixed again.

And, in case of adjusting installation position transversely, the car radio set 10 can be moved back-and-forth after unscrewing the bolts 101 in the transversely extended slot holes 114 which are formed in the first support plates 113 by connecting two holes transversely.

Then, after the bolts 101 are screwed back in the slot holes 114, the position of the car radio set 10 is fixed again.

On the other hand, the present invention enables preparation of front cases 110 with front holes 111 of a variety of sizes.

Accordingly, a car radio set 10 of any size can be installed within a front case 110 having a front hole 111 of corresponding size, and then the front case 110 can be assembled to the rear case 120, without regard to size of the car radio set 10.

And accordingly, front cases 110 with front holes 111 of a variety of sizes can be prepared, so that mounting cases for car radio set 100 can be compatible with car radio sets 10 with a variety of sizes with replacing only the front cases 110 and without replacing the whole parts of the mounting cases for car radio set 100, thus providing a more economical way of installing a car radio set 10.

And in case of replacing an existing car radio set 10 with a car radio set 10 of different size, the existing rear case 120 installed in the mounting space 103 in vehicle dashboard 102 is not required to be pulled out and only the replacement of the existing front case 110 is required, so that a fast and easy way of replacing existing car radio set 10 can be provided.

Although the preferred embodiment of the present invention has been disclosed for illustrative purposes, the present invention is not limited to the preferred embodiment. Furthermore, those skilled in the art will appreciate that various modifications, additions and substitutions are possible, without departing from the scope and spirit of the invention as disclosed in the accompanying claims.

## Claims

1. A mounting case for car radio set, the mounting case comprising:
a front case, wherein a front hole into which a car radio set is inserted is formed, a pair of first bolt holes are formed at both sides of the front hole and a pair of first support plates wherein a plurality of slot holes are formed are installed at both side edges of the front hole, so that the car radio set can be fastened to the first support plates by inserting bolts into the slot holes;
and
a rear case is wherein a pair of front case installation parts wherein a pair of second bolt holes are formed are installed on the inside of both sides therein, so that the front case can be fastened to the rear case by inserting bolts into the first and the second bolt holes while corresponding the first and second bolt holes are met.

2. The mounting case of claim 1, wherein the first support plates are **characterized by**:
having the plurality of longitudinally or transversely extended slot holes which are respectively formed by connecting two holes.

3. The mounting case of claim 1 or 2, wherein the rear case further includes:
a plurality of second support plates protruding outside from each sides of the rear case;
and
a pair of fix holes formed at the both sides of the rear case, through which the slot holes in the first support plates can be seen when the front and the rear case are assembled and fixed.

4. The mounting case of any one or more of claims 1 to 3, wherein the first support plates further include:
a pair of third bolt holes which are formed on the inside edges of the first support plates.
